# EUROPÄISCHE PATENTSCHRIFT

(11) **EP 1 599 991 B1**
(45) Veröffentlichungstag und Bekanntmachung des Hinweises auf die Patenterteilung: **24.10.2012**
(21) Anmeldenummer: 03816136.0
(22) Anmeldetag: 16.12.2003
(51) Int. Cl.: H04W 88/06

(54) **ANORDNUNG UND SCHNITTSTELLENMODUL ZUR ANBINDUNG UNTERSCHIEDLICHER MOBILER FUNKTELEFONE AN BEDIENKOMPONENTEN IN EINEM KFZ**
ARRANGEMENT AND INTERFACE MODULE FOR CONNECTING DIFFERENT RADIO TELEPHONES TO OPERATOR COMPONENTS IN A MOTOR VEHICLE
AGENCEMENT ET MODULE D'INTERFACE POUR LA CONNEXION DE DIVERS RADIOTELEPHONES MOBILES A DES COMPOSANTS DE COMMANDE DANS UN VEHICULE A MOTEUR

(30) Priorität: 06.03.2003 DE 10310115
(43) Veröffentlichungstag der Anmeldung: 30.11.2005
(73) Patentinhaber: Continental Automotive GmbH, 30165 Hannover (DE)
(72) Erfinder: JÜNGLING, Lars, 35423 Lich (DE); OBERLÄNDER, Ralf, 35606 Solms (DE)
(86) Internationale Anmeldenummer: PCT/DE2003/004149
(87) Internationale Veröffentlichungsnummer: WO 2004/080042

(56) Entgegenhaltungen:
- DE-A- 19 848 791
- US-A1- 2002 032 042
- "Universeller Bluetooth-Adapter für Auto-Freisprechanlagen " HEISE, [Online] 6. November 2002 (2002-11-06), XP002278001 Gefunden im Internet: <URL:http://www.heise.de/newsticker/meldun g/32125 > [gefunden am 2004-04-26]
- BMW: "BMW Handy, Bedienung über MID, MFL, Bordcomputer" ZUSATZBETRIEBSANLEITUNG, [Online] 1997, Seiten 1-20, XP002277916 Gefunden im Internet: <URL:http://www.7er.com/modelle/e38/betrie bsanleitungen/autotelefon_mid_1997.pdf> [gefunden am 2004-04-23]

## Beschreibung

Die Erfindung betrifft eine Anordnung zur Fernbedienung eines mobilen Funktelefons in einem Kraftfahrzeug, wobei das Funktelefon mit einer als eigenständiges Gerät im Fahrzeug installierten Standardfreisprecheinrichtung verbunden ist, welche ein Mikrofon und einen Lautsprecher enthält. Des weiteren betrifft die Erfindung ein Schnittstellenmodul zur Herstellung einer Kommunikationsverbindung zwischen einem Funktelefon und einer zur Fernbedienung des Funktelefons geeigneten Eingabe- und einer Ausgabeeinheit.

Entsprechend der Gesetzgebung müssen mobile Funktelefone in Kraftfahrzeugen aus Sicherheitsgründen über Freisprecheinrichtungen betrieben werden. Die Standardausführung einer Freisprecheinrichtung besteht dabei grundsätzlich aus einem Mikrofon und einem Lautsprecher sowie einer Schnittstelle zum Funktelefon. Optional kann eine Telefonaufnahme vorgesehen sein, in die das Funktelefon während der Fahrt eingesteckt wird. Staridardfreisprecheinrichtungen sind als eigenständige Geräte im Fahrzeug installiert. Inzwischen werden auch integrierte Systeme auf dem Fahrzeugmarkt angeboten, bei denen die Freisprechfunktion über ein im Fahrzeug bereits installiertes Audiosystem realisiert wird. Dazu wird das Funktelefon entweder per Kabel oder über eine Kurzstreckenfunkverbindung mit dem Audiosystem verbunden. Ein solches integriertes System unter Nutzung einer Kurzstreckenfunkverbindung ist beispielsweise aus der DE 19921533 C1 bekannt. Neben der Bereitstellung der Freisprechfunktion kann das dort beschriebene Audiosystem gleichzeitig zur Bedienung des Mobiltelefons genutzt werden.

Der Ansatz einer Fernbedienung des Funktelefons über Bedien - und/oder Anzeigeelemente eines Navigations-, Multimedia- oder Audiogerätes wird auch in anderen auf dem Fahrzeugmarkt erhältlichen System verfolgt, wobei entweder das Funktelefon oder eine speziell für das entsprechende Gerät entwickelte Freisprecheinrichtung an diese Geräte angeschlossen werden. Als Bedienelemente dienen z.B. Tasten, Drehknöpfe oder Bildschirme mit Touchfunktion, während für die Anzeige jedwede Art eines Displays verwendet werden kann.

All diese integrierten Systeme, unabhängig davon ob sie ausschließlich zum Freisprechen oder auch zur Fernbedienung ausgelegt sind, stellen in jedem Fall spezielle Lösungen dar, welche den Anwender zwingen, ausschließlich aufeinander abgestimmte Gerätekombinationen einzusetzen. Aufgrund der damit verbundenen Kosten und der Einschränkung auf nur wenige zu verwendende Arten von Funktelefonen, bevorzugen viele Autofahrer Standardfreisprecheinrichtungen, die deutlich preiswerter sind und bei einem Wechsel des Funktelefons einfach angepasst oder sogar beibehalten werden können.

Bei Standardfreisprecheinrichtungen ist zwar die Freisprechfunktion gewährleistet, doch ist der Autofahrer für die Bedienung auf die Tastatur und das Display des Funktelefons angewiesen, welche während der Fahrt nicht immer einfach zu erreichen bzw. zu erkennen sind. Einige Standardfreisprecheinrichtungen sehen deshalb eine Sprachbedienung vor bzw. sind mit einer zusätzlichen Fernbedienung und einem Display ausgerüstet. Die Sprachbedienung wird jedoch von Fahrern nur ungern genutzt. Es besteht allgemein eine natürliche Hemmschwelle, mit technischen Geräten zu reden, und diese Hemmschwelle wird noch erhöht, wenn weitere Personen im Fahrzeug anwesend sind.

Die US-2002/0032042-A1 offenbart eine Mobiltelefonhalterung für ein Kraftfahrzeug mit integrierter Sprachbedienfunktion für das Mobiltelefon. An die Telefonhalterung kann ein externes Gerät angeschlossen werden, welches dann ebenfalls per Spracheingabe bedienbar ist.

Die DE-19848791-A1 beschreibt eine Schnittstelleneinrichtung zur Informationsübertragung zwischen Eingabe-/Ausgabemitteln und Anwendungsgeräten. Die Anwendungsgeräte, wie Radio, CD-Spieler, Mobiltelefon, Navigationssystem oder Bordcomputer, werden über die Schnittstelleinrichtung direkt mit Eingabemitteln, wie Tastenfeld, Dreh-Drück-Steller, Mikrofon oder Videokamera, sowie mit Ausgabemitteln, wie Bildschirm oder Lautsprecher, verbunden.

Im Internet wurde unter der Adresse www.heise.de/newsticker/meldung/32125 mit Datum 2002-11-06 ein Artikel unter dem Titel "Universeller Bluetooth-Adapter für Auto-Freisprechanlage" veröffentlicht. Der Bluetooth-Adapter wird per Kabel an beliebige Freisprecheinrichtungen angeschlossen. Ein mit einer Bluetooth-Schnittstelle ausgerüstetes Mobiltelefon kann sich dann per Bluetooth mit der Freisprecheinrichtung verbinden. Der Adapter verfügt über spezielle Tasten, mit denen einige Funktionen, wie Annahme oder Beenden eines Telefonanrufs, oder Einstellen der Lautstärke, bedienbar sind.

Aufgabe der vorliegenden Erfindung ist es, ausgehend von einer beliebigen Standardfreisprecheinrichtung im Fahrzeug eine gleichzeitige Fernbedienung eines Funktelefons zu ermöglichen.
Die Aufgabe wird durch eine Anordnung gemäß Patentanspruch 1 gelöst. Bei dieser Anordnung wird von einer Standardfreisprecheinrichtung mit einem Mikrofon und einem Lautsprecher ausgegangen, die als eigenständiges Gerät bereits im Fahrzeug installiert ist. Die Standardfreisprecheinrichtung kommuniziert per Kabel oder per drahtloser Kurzstreckenverbindung, wie z.B. Bluetooth oder Infrarot, mit dem Funktelefon und besitzt üblicherweise eine zusätzliche Telefonhalterung.

Kern der Erfindung ist die Verwendung eines eigenständigen, zentralen Schnittstellenmoduls zur Herstellung einer Kommunikationsverbindung zwischen dem mit der Standardfreisprecheinrichtung verbundenen Funktelefon und im Fahrzeug vorhandenen Eingabe- und Ausgabeeinheiten, mit denen das Telefon fernbedient werden kann. So besitzt heutzutage nahezu jedes Fahrzeug wenigstens ein Audiogerät, wenn nicht sogar ein Navigationsgerät oder Multimediasystem. Wesentlich bei der Erfindung ist, dass das Schnittstellenmodul über standardisierte Schnittstellen mit allen Komponenten kommuniziert. Das Schnittstellenmodul enthält eine Kommunikationsmanagementeinheit, welche die Datenformate zwischen dem Funktelefon und der Eingabe- und der Ausgabeeinheit konvertiert. Durch die Verwendung eines Schnittstellenmoduls mit standardisierten Ein- und Ausgangsschnittstellen wird es möglich, beliebige, auf dem Markt vorhandene Fahrzeuggeräte mit dem Funktelefon zu verbinden, wodurch der Anwender mehr Möglichkeiten in der Zusammenstellung der Fahrzeugsysteme erhält. Da das Schnittstellenmodul die nötige Transformation der Kommunikationsdaten ineinander vornimmt, müssen die zu verbindenden Systeme nicht mehr über aufeinander abgestimmte Schnittstellen verfügen, wie es bei den eingangs beschriebenen integrierten Systemen erforderlich ist.

In einer speziellen Ausführungsform ist es vorgesehen, die Bedieneinheit eines Fahrzeugmultimediasystems zur Fernbedienung des Funktelefons zu nutzen. In einer anderen Ausführung wird ein Navigationsgerät verwendet. Nach heutigem Stand der Technik kommunizieren diese Systeme über einen RS232- bzw. einen D2B-Bus, an den das Schnittstellenmodul einfach mit angeschlossen wird. Weiterhin können auch Autoradios, Notebooks oder PDAs zur Fernbedienung eines Funktelefons eingesetzt werden. In all diesen Geräten sind sowohl eine Eingabeeinheit, wie Tastatur, Spracheingabe, Touchscreen oder Bedienknöpfe, als auch eine Ausgabeeinheit, wie Bildschirm, LCD-Anzeige oder Sprachausgabe, vorhanden. Denkbar wäre jedoch auch, über das Schnittstellenmodul eine eigenständige Tastatur und einen Ausgabemonitor anzuschließen, sofern im Fahrzeug keine anderen Geräte mit geeigneten Mensch-Maschine-Schnittstellen (MMIs) vorhanden sind. Es ist in einer Weiterentwicklung des Schnittstellenmoduls vorgesehen, mehrere der genannten Geräte gleichzeitig anzuschließen, wobei entweder die zur Fernbedienung des Funktelefons zu verwendende Einheit vorab festgelegt ist oder aber über das Schnittstellenmodul ausgewählt werden kann. Beim Anschluss mehrerer Geräte kann das Schnittstellenmodul auch zum Datenaustausch zwischen diesen Geräten dienen.

Die Kommunikationsverbindung zwischen Schnittstellenmodul und Funktelefon kann auf zwei Wegen hergestellt werden. Entweder besteht zwischen beiden eine drahtlose Kurzstreckenverbindung, z.B. über Bluetooth oder Infrarot, oder beide werden an einen Datenbus angeschlossen. In letzterem Fall besteht eine spezielle Lösung darin, bei einer bereits existierenden Datenverbindung zwischen der Standardfreisprecheinrichtung und dem Funktelefon denselben Datenbus auch für die Verbindung zwischen dem Funktelefon und dem Schnittstellenmodul zu verwenden. Die direkte Verbindung zwischen der Standardfreisprecheinrichtung und dem Funktelefon wird aufgetrennt und das Schnittstellenmodul dazwischengeschaltet. In allen Fällen wird stets die Freisprechfunktion der Standardfreisprecheinrichtung verwendet.

Damit die Kommunikationsmanagementeinheit die Umwandlung der Datenformate zwischen Funktelefon und Ein- und Ausgabeeinheit vornehmen kann, muss sie über die gerätespezifischen Befehlssätze zur Datenübertragung verfügen. Diese sind üblicherweise in einem im Schnittstellenmodul vorhandenen Speicherbereich abgelegt. Nun ist es möglich, die Befehlssätze für eine möglichst große Zahl von auf dem Markt vorhandenen Funktelefonen und Fahrzeugrechnersystemen abzuspeichern und je nach angeschlossenem Gerät in die Kommunikationsmanagementeinheit zu laden. Dies erfordert jedoch erheblichen Speicherplatz. Außerdem bleiben neu entwickelte Geräte vollkommen unberücksichtigt. Entscheidet sich der Anwender später für den Kauf eines neuen Telefons oder z.B. neuen Audiosystems müssen die Befehlssätze in jedem Fall nachgepflegt werden, was entweder von dem Anwender selbst oder von einer Werkstatt durchgeführt werden muss. Um diesen Aufwand zu reduzieren, ist es in einer speziellen Ausführung vorgesehen, dass das Schnittstellenmodul selbständig eine Fernfunkverbindung zu einem externen Server herstellen kann. Über diese Funkverbindung kann es dann die Befehlssätze zu neu erkannten Geräten anfordern und empfangen. Das Herstellen der Fernfunkverbindung kann ebenso von einem der angeschlossenen Geräte mit Ein- und Ausgabeeinheit veranlasst werden, d.h. das Schnittstellenmodul reagiert auf einen Datenbefehl eines externen Gerätes und baut daraufhin die Funkverbindung auf. Ebenso ist es denkbar, dass eine drahtlose oder auch drahtgebundene Verbindung zu einem im Fahrzeug mitgeführten Rechnersystem, wie Notebook oder PDA, hergestellt wird, um von dort die erforderlichen Datensätze zu laden. Das Schnittstellenmodul und insbesondere das vereinfachte Softwareupdate bei einem Wechsel des Funktelefons erlauben einem Anwender eine flexible Zusammenstellung der Anordnung aus Fahrzeugrechnersystem und Funktelefon mit Standardfreisprecheinrichtung. Bei gestiegenen Ansprüchen kann einfach nachgerüstet werden. Wird von vornherein eine Standardfreisprecheinrichtung mit einer Funk- bzw. Infrarotschnittstelle genutzt, so sind bei einem Wechsel des Telefons nicht einmal mehr Anpassungen im Schnittstellenbereich zwischen Funktelefon und Freisprecheinrichtung notwendig.

In einer speziellen Ausführung verfügt das Schnittstellenmodul über eine spezielle Busschnittstelle, über die Zusatzmodule anschließbar sind. Die Busschnittstelle kann eine Eigenentwicklung des Herstellers des Schnittstellenmoduls sein oder auch eine Standard-Erweiterungsschnittstelle wie USB. Über diese Busschnittstelle werden in speziellen Ausführungen ein Bluetooth-Modul bzw. ein Internet-Modul mit dem Schnittstellenmodul verknüpft. Außerdem kommen als Zusatzmodule in Frage CAN- und Infrarotmodule, Module zur Spracherkennung bzw. Sprachausgabe sowie Module zur Umsetzung fahrzeugbezogener Funktionen wie Flottenmanagement und Fahrzeugortung. Die Liste ist beliebig erweiterbar. Ein Internetmodul kann insbesondere dazu verwendet werden, um beim Wechsel eines externen Gerätes eine Fernfunkverbindung mit einem externen Server oder auch eine Nahverbindung zu einem im Fahrzeug mitgeführten Rechner aufzubauen und den neuen Befehlssatz für die Kommunikation mit diesem Gerät herunterzuladen.

Eine genauere Beschreibung bevorzugter Ausführungen der Erfindung erfolgt nachfolgend anhand der Zeichnung. Es zeigen:
- Figur 1: die Blockdarstellung einer Anordnung zur Verbindung eines Funktelefons mit einem Audiosystem,
- Figur 2: die Blockdarstellung einer Anordnung zur Verbindung eines Funktelefons mit einem Navigationssystem.

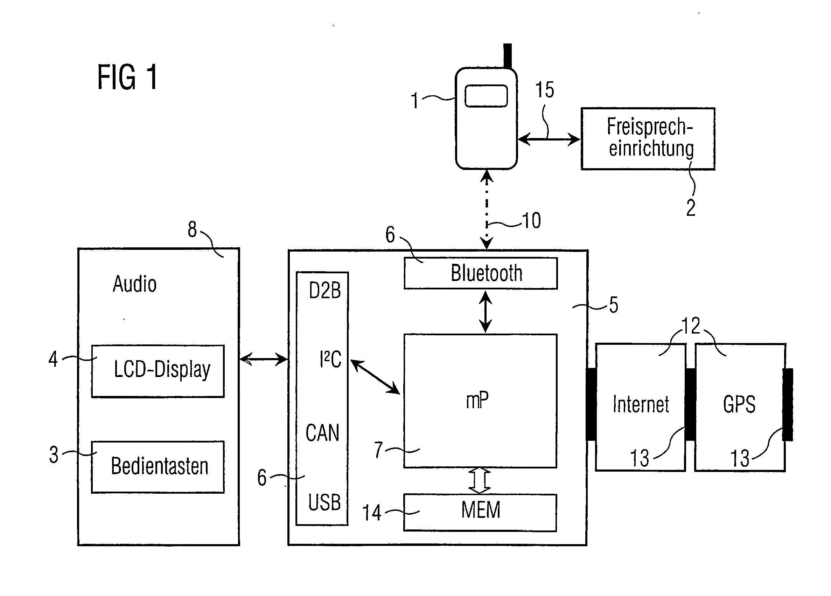

In Figur 1 ist ein Funktelefon 1 zu sehen, welches sich in einer, hier nicht dargestellten, Telefonhalterung einer Standardfreisprecheinrichtung 2 befindet. Zu der Standardfreisprecheinrichtung 2 gehören weiterhin ein Mikrofon und ein Lautsprecher. Über eine Steckverbindung in der Telefonhalterung sowie ein Kabel 15 wird das Funktelefon 1 elektrisch mit der Standardfreisprecheinrichtung 2 verbunden. Das Funktelefon 1 kommuniziert über eine Bluetooth-Funkverbindung 10 mit einem Schnittstellenmodul 5. Dieses Schnittstellenmodul 5 weist eine ganze Reihe von Standardschnittstellen 6 auf. So sind neben einer Bluetooth-Schnittstelle auch Anschlüsse für D2B-, I²C-, CAN und USB-Busverbindungen vorgesehen. Belegt ist von den Busanschlüssen lediglich die I²C-Schnittstelle, und zwar ist hier ein Audiosystem 8 angeschlossen. In dem Schnittstellenmodul 5 sorgt eine Kommunikationsmanagementeinheit 7, in dem speziellen Fall ein Mikroprozessor, für die Konvertierung der verschiedenen Ein-/Ausgangsdatenformate ineinander. In dem dargestellten Fall werden die im Bluetooth-Format empfangenen Funktelefondaten in das für das Audiosystem verständliche I²C-Format umgewandelt und umgekehrt. Die dafür erforderlichen Informationen, d.h. die gerätespezifischen Befehlssätze, holt sich die Kommunikationsmanagementeinheit 7 aus dem Speicherbereich 14. In das Audiosystem 8 sind eine Ausgabeeinheit 4 in Form eines LCD-Displays und eine Eingabeeinheit 3 in Form von Bedientasten integriert. Über diese Einheiten kann nicht nur das Audiosystem selbst sondern auch das Funktelefon bedient werden. Die Telefonhalterung mit dem Funktelefon 1 kann demnach an einer beliebigen, für den Fahrer während der Fahrt nicht erreichbaren Stelle im Fahrzeuginneren befestigt sein. Wählt man außerdem zwischen dem Funktelefon 1 und der Standardfreisprecheinrichtung 2 eine Bluetoothverbindung anstelle der Kabelverbindung 15, entfällt sogar das Einstecken des Funktelefons 1 in die Telefonhalterung. Dann genügt es, wenn sich das Funktelefon 1 einfach im Empfangsbereich der Standardfreisprecheinrichtung 2 und des Schnittstellenmoduls 5 befindet.

Wie aus Figur 1 weiterhin hervorgeht, kann das Schnittstellenmodul 5 über die Busschnittstelle 13 um Zusatzmodule 12 erweitert werden. Die Zusatzmodule 12 sind im speziellen ein Internet- und ein GPS-Modul. Das Internetmodul kann vom Schnittstellenmodul 5 genutzt werden, um beim Ersetzen des Funktelefons 1 oder auch des Audiosystems 8 durch ein jeweils neues Gerät eine Internet-Funkverbindung zu einem externen Server herzustellen und von dort die neuen Befehlssätze für die Kommunikationsmanagementeinheit 7 herunterzuladen, welche dann in der Speichereinheit 14 abgelegt werden. Das GPS-Modul dient der Fahrzeugortung, was z.B. in Verbindung mit einem Flottenmanagementsystem von Interesse sein kann, insbesondere in den Fällen, in denen kein eigenständiges Navigationssystem mit integrierter Ortungseinheit vorgesehen ist.

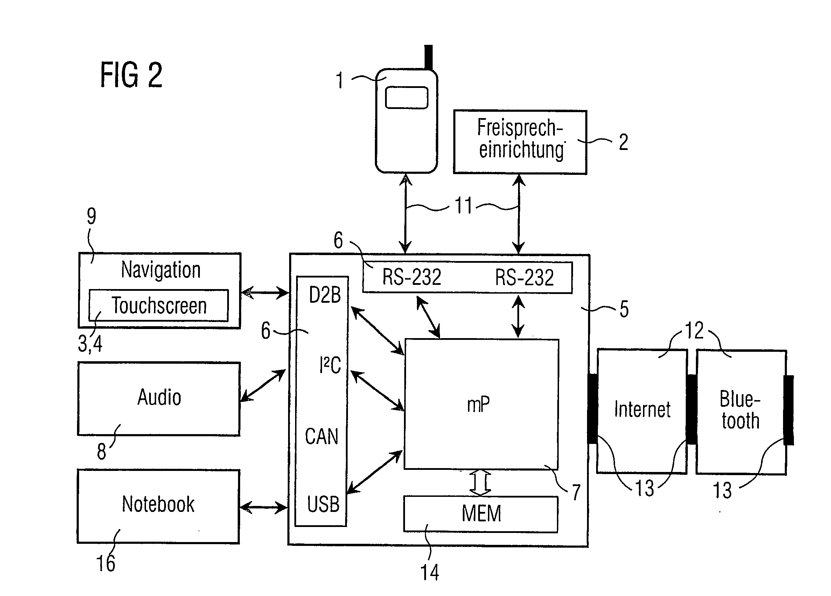

Figur 2 zeigt eine ähnliche Anordnung zu Figur 1. Unterschiede bestehen hier nur in der Art der Kommunikationsverbindung zwischen dem Schnittstellenmodul 5 und dem Funktelefon 1 sowie in der Anzahl der angeschlossenen Geräte mit Ein-/Ausgabefunktion. Das Funktelefon 1 und die Standardfreisprecheinrichtung 2 kommunizieren in diesem Fall über einen seriellen RS232-Bus. Die direkte Verbindung zwischen beiden ist aufgetrennt worden und das Schnittstellenmodul 5 dazwischengeschaltet worden. Zum einen können die direkt zu übertragenen Daten zwischen Funktelefon 1 und Standardfreisprecheinrichtung 2 einfach durch das Schnittstellenmodul durchgeschleift werden, d.h. sie werden unverändert weitergeleitet. Zum anderen dient das Schnittstellenmodul 5 mit seiner Kommunikationsmanagementeinheit 7 zur Konvertierung der Fernbedienungsdaten des Funktelefons 1. Diese Fernbedienungsdaten werden zwischen einem ausgewählten externen Gerät mit integrierter Ein- und Ausgabeeinheit und dem Funktelefon 1 übertragen. Als externe Geräte mit Ein-/Ausgabeeinheit sind hier ein Audiosystem 8, ein Notebook 16 sowie ein Navigationssystem 9 dargestellt. Das Audiosystem 8 verfügt über Bedientasten sowie ein LCD-Display und das Notebook über eine herkömmliche Tastatur und einen Bildschirm, wobei diese Elemente nicht mit eingezeichnet sind. Grafisch hervorgehoben ist lediglich der gleichzeitig als Eingabeeinheit 3 und als Ausgabeeinheit 4 dienende Touchscreen des Navigationssystems 9. Das Navigationssystem 9 ist, z.B. über einen Wählschalter am Schnittstellenmodul 5, als Fernbedienung für das Funktelefon 1 ausgewählt worden, so dass die Kommunikationsmanagementeinheit 7 die Funktelefondaten ausschließlich zwischen der dem Funktelefon 1 zugeordneten RS232-Schnittstelle und der D2B-Busverbindung zum Navigationssystem 9 umwandelt und überträgt. In einer Weiterentwicklung der Kommunikationsmanagementeinheit 7 kann diese außerdem Daten zwischen den externen Fahrzeugrechnersystemen (8, 9, 16) weiterleiten. So ist es z.B. von Interesse, die über das Audiosystem 8 empfangenen Verkehrsinformationen an das Navigationssystem 9 weiterzuleiten oder bestimmte Termin- und Ortsinformationen aus einem im Notebook 16 abgelegten Terminplan in die im Navigationssystem 9 durchzuführende Routenplanung einzubeziehen. Diese Art des Informationsaustausches zwischen Fahrzeugrechnersystemen findet auch heute schon statt, doch ergeben sich durch die Verwendung des Schnittstellenmoduls 5 mit den Standardschnittstellen 6 neue Kombinationsmöglichkeiten.

Die Erweiterung des Schnittstellenmoduls 5 um ein Internetmodul ist auch in Figur 2 abgebildet. Abgesehen von der bereits beschriebenen Funktion zum Updaten der Kommunikationsbefehlssätze kann eine Internetverbindung z.B. auch zum Empfang navigationsbezogener Informationen genutzt werden. Jede Art des Informationsaustausches zwischen den Fahrzeugrechnersystemen und externen Datenservern wird auf diese Art möglich. Des Weiteren ist ein Bluetooth-Modul als eines der Zusatzmodule 12 vorgesehen.

## Patentansprüche

1. Anordnung zur Fernbedienung eines mobilen Funktelefons (1) über Bedien- und Anzeigeelemente in einem Kraftfahrzeug, wobei das Funktelefon (1) mit einer als eigenständiges Gerät im Fahrzeug installierten Standardfreisprecheinrichtung (2) verbunden ist, welche ein Mikrofon und einen Lautsprecher enthält, und ein eigenständiges, zentrales Schnittstellenmodul (5) über standardisierte Schnittstellen mit dem Funktelefon verbunden ist und das Funktelefon (1) über das eigenständige, zentrale Schnittstellenmodul (5) mit einer Eingabe- (3) und einer Ausgabeeinheit (4) verbunden ist,
**dadurch gekennzeichnet,**
• **dass** die Eingabe-(3) und die Ausgabeeinheit (4) in ein weiteres im Fahrzeug installiertes, elektronisches Gerät integriert sind,
• **dass** das Schnittstellenmodul (5) über eine standardisierte Schnittstelle zur Kommunikation mit der Eingabe-(3) und der Ausgabeeinheit (4) des weiteren elektronischen Geräts verfügt und
• **dass** das Schnittstellenmodul (5) eine Kommunikationsmanagementeinheit (7) enthält zur Konvertierung der Datenformate der Fernbedienungsdaten zwischen dem Funktelefon (1) und der Eingabe- (3) und der Ausgabeeinheit (4) des weiteren elektronischen Geräts.

2. Anordnung nach Anspruch 1, **dadurch gekennzeichnet, dass** die Eingabe- (3) und Ausgabeeinheit (4) Bestandteile eines Audiosystems (8) sind.

3. Anordnung nach Anspruch 1, **dadurch gekennzeichnet, dass** die Eingabe- (3) und Ausgabeeinheit (4) Bestandteile eines Navigationssystems (9) sind.

4. Anordnung nach Anspruch 1, **dadurch gekennzeichnet, dass** gleichzeitig mehrere im Fahrzeug installierte, elektronische Geräte mit Eingabe- (3) und/oder Ausgabeeinheiten (4) mit dem Schnittstellenmodul (5) verbunden sind.

5. Anordnung nach einem der vorhergehenden Ansprüche, **dadurch gekennzeichnet, dass** die Verbindung zwischen dem Funktelefon (1) und dem Schnittstellenmodul (5) durch eine drahtlose Kurzstreckenverbindung (10) gebildet wird.

6. Anordnung nach einem der vorhergehenden Ansprüche 1 bis 4, **dadurch gekennzeichnet, dass** die Verbindung zwischen dem Funktelefon (1) und dem Schnittstellenmodul (5) durch einen Datenbus (11) gebildet wird.

7. Anordnung nach Anspruch 6, **dadurch gekennzeichnet, dass** die Verbindung zwischen dem Funktelefon (1) und dem Schnittstellenmodul (5) durch denselben Datenbus (11) gebildet wird, der auch das Funktelefon (1) und die Standardfreisprecheinrichtung (2) verbindet, und dass das Schnittstellenmodul (5) über diesen Datenbus (11) zwischen das Funktelefon (1) und die Standardfreisprecheinrichtung (2) geschaltet ist.

8. Anordnung nach einem der vorhergehenden Ansprüche, **dadurch gekennzeichnet, dass** das Schnittstellenmodul (5) ausgelegt ist, selbständig eine Funkverbindung zu einem externen Server herzustellen.

9. Anordnung nach Anspruch 8, **dadurch gekennzeichnet, dass** das Schnittstellenmodul (5) ausgelegt ist, die zur Konvertierung der Datenformate zwischen dem Funktelefon (1) und der Eingabe- (3) und der Ausgabeeinheit (4) erforderlichen Informationen per Funksignal von dem externen Server anzufordern und zu empfangen.

10. Anordnung nach einem der vorhergehenden Ansprüche, **dadurch gekennzeichnet, dass** die Funktionalität des Schnittstellenmoduls (5) mittels Zusatzmodulen (12) erweiterbar ist, wobei zur Verbindung der Zusatzmodule (12) mit dem Schnittstellenmodul (5) eine spezielle Busschnittstelle (13) vorgesehen ist.

11. Anordnung nach Anspruch 10, **dadurch gekennzeichnet, dass** das Zusatzmodul (12) ein Internet-Modul ist.

12. Anordnung nach Anspruch 10, **dadurch gekennzeichnet, dass** das Zusatzmodul (12) ein Bluetooth-Modul ist.

13. Schnittstellenmodul (5) zur Verwendung in einem ein Funktelefon (1), eine Standardfreisprecheinrichtung und ein weiteres externes Gerät, mit eine Eingabe (3) und Ausgabeeinheit darin integriert, aufweisenden System zur Herstellung einer Kommunikationsverbindung zwischen dem Funktelefon (1) und dem weiteren externen Gerät, über die Bedienbefehle zur Fernbedienung des Funktelefons (1) von dem externen Gerät zu dem Funktelefon übertragbar sind, wobei das Schnittstellenmodul (5) über eine erste standardisierte Schnittstelle zur Kommunikation mit dem Funktelefon (1) in einem ersten Datenformat und eine zweite standardisierte Schnittstelle zur Kommunikation mit dem externen Gerät in einem zweiten Datenformat verfügt und das Schnittstellenmodul (5) eine Kommunikationsmanagementeinheit (7) zur Konvertierung der Datenformate aufweist.

14. Schnittstellenmodul (5) nach Anspruch 13, **dadurch gekennzeichnet , dass** das Schnittstellenmodul (5) über eine drahtlose Kurzstreckenverbindung (10) zur Kommunikation mit dem Funktelefon (1) verfügt.

15. Schnittstellenmodul (5) nach Anspruch 13, **dadurch gekennzeichnet, dass** das Schnittstellenmodul (5) über einen Datenbus (11) zur Kommunikation mit dem Funktelefon (1) verfügt.

16. Schnittstellenmodul (5) nach Anspruch 15, **dadurch gekennzeichnet, dass** der Datenbus (11) zur Kommunikation mit dem Funktelefon (1) derselbe Datenbus ist, über den auch das Funktelefon (1) und die Standardfreisprecheinrichtung (2) verbindbar sind, und dass das Schnittstellenmodul (5) über diesen Datenbus (11) zwischen das Funktelefon (1) und die Standardfreisprecheinrichtung (2) schaltbar ist.

17. Schnittstellenmodul (5) nach einem der vorhergehenden Ansprüche 13 bis 16, **dadurch gekennzeichnet, dass** im Schnittstellenmodul (5) eine spezielle Busschnittstelle (13) zur Erweiterung der Funktionalität des Schnittstellenmoduls (5) mittels Zusatzmodulen (12) vorhanden ist.

18. Schnittstellenmodul (5) nach Anspruch 17, **dadurch gekennzeichnet , dass** das Zusatzmodul (12) ein Internet-Modul ist.

19. Schnittstellenmodul (5) nach Anspruch 17, **dadurch gekennzeichnet, dass** das Zusatzmodul (12) ein Bluetooth-Modul ist.

20. Schnittstellenmodul (5) nach einem der vorhergehenden Ansprüche 13 bis 19, **dadurch gekennzeichnet, dass** das Schnittstellenmodul (5) ausgelegt ist, selbständig eine Funkverbindung zu einem externen Server herzustellen.

21. Schnittstellenmodul (5) nach Anspruch 20, **dadurch gekennzeichnet , dass** das Schnittstellenmodul (5) ausgelegt ist, die zur Konvertierung der Datenformate zwischen dem Funktelefon (1) und der Eingabe- (3) und der Ausgabeeinheit (4) erforderlichen Informationen per Funksignal von einem externen Server anzufordern und zu empfangen.

## Claims

1. Arrangement for remotely controlling a mobile radio telephone (1) using control and display elements in a motor vehicle, where the radio telephone (1) is connected to a standard hands-free device (2) which is installed as a stand-alone appliance in the vehicle and which contains a microphone and a loudspeaker, and a stand-alone, central interface module (5) is connected to the radio telephone via standardized interfaces and the radio telephone (1) is connected to an input unit (3) and an output unit (4) via the stand-alone, central interface module (5),
**characterized**
- **in that** the input unit (3) and the output unit (4) are integrated in a further electronic appliance installed in the vehicle,
- **in that** the interface module (5) has a standardized interface for communicating with the input unit (3) and the output unit (4) of the further electronic appliance, and
- **in that** the interface module (5) contains a communication management unit (7) for converting the data formats of the remote control data between the radio telephone (1) and the input unit (3) and the output unit (4) of the further electronic appliance.

2. Arrangement according to Claim 1, **characterized in that** the input unit (3) and the output unit (4) are parts of an audio system (8).

3. Arrangement according to Claim 1, **characterized in that** the input unit (3) and the output unit (4) are parts of a navigation system (9).

4. Arrangement according to Claim 1, **characterized in that** a plurality of electronic appliances installed in the vehicle which have input units (3) and/or output units (4) are simultaneously connected to the interface module (5).

5. Arrangement according to one of the preceding claims, **characterized in that** the link between the radio telephone (1) and the interface module (5) is formed by a wireless short-haul link (10).

6. Arrangement according to one of the preceding Claims 1 to 4, **characterized in that** the link between the radio telephone (1) and the interface module (5) is formed by a data bus (11).

7. Arrangement according to Claim 6, **characterized in that** the link between the radio telephone (1) and the interface module (5) is formed by the same data bus (11) as also connects the radio telephone (1) and the standard hands-free device (2), and **in that** the interface module (5) is connected between the radio telephone (1) and the standard hands-free device (2) via this data bus (11).

8. Arrangement according to one of the preceding claims, **characterized in that** the interface module (5) is designed to set up a radio link to an external server independently.

9. Arrangement according to Claim 8, **characterized in that** the interface module (5) is designed to request and receive the information required for converting the data formats between the radio telephone (1) and the input unit (3) and the output unit (4) from the external server by radio signal.

10. Arrangement according to one of the preceding claims, **characterized in that** the functionality of the interface module (5) can be expanded using supplementary modules (12), a special bus interface (13) being provided for the purpose of connecting the supplementary modules (12) to the interface module (5).

11. Arrangement according to Claim 10, **characterized in that** the supplementary module (12) is an internet module.

12. Arrangement according to Claim 10, **characterized in that** the supplementary module (12) is a Bluetooth module.

13. Interface module (5) for use in a system - having a radio telephone (1), a standard hands-free device and a further external appliance, with an input unit (3) and an output unit integrated therein - for setting up a communication link between the radio telephone (1) and the further external appliance, which communication link can be used to transmit operator control commands for remotely controlling the radio telephone (1) from the external appliance to the radio telephone, wherein the interface module (5) has a first standardized interface for communicating with the radio telephone (1) in a first data format and a second standardized interface for communicating with the external appliance in a second data format, and the interface module (5) has a communication management unit (7) for converting the data formats.

14. Interface module (5) according to Claim 13, **characterized in that** the interface module (5) has a wireless short-haul link (10) for communicating with the radio telephone (1).

15. Interface module (5) according to Claim 13, **characterized in that** the interface module (5) has a data bus (11) for communicating with the radio telephone (1).

16. Interface module (5) according to Claim 15, **characterized in that** the data bus (11) for communicating with the radio telephone (1) is the same data bus as can also be used to connect the radio telephone (1) and a standard hands-free device (2), and **in that** the interface module (5) can be connected between the radio telephone (1) and the standard hands-free device (2) using this data bus (11).

17. Interface module (5) according to one of the preceding Claims 13 to 16, **characterized in that** the interface module (5) contains a special bus interface (13) for expanding the functionality of the interface module (5) using supplementary modules (12).

18. Interface module (5) according to Claim 17, **characterized in that** the supplementary module (12) is an internet module.

19. Interface module (5) according to Claim 17, **characterized in that** the supplementary module (12) is a Bluetooth module.

20. Interface module (5) according to one of the preceding Claims 13 to 19, **characterized in that** the interface module (5) is designed to set up a radio link to an external server independently.

21. Interface module (5) according to Claim 20, **characterized in that** the interface module (5) is designed to request and receive the information required for converting the data formats between the radio telephone (1) and the input unit (3) and the output unit (4) from an external server by radio signal.

## Revendications

1. Agencement de télécommande d'un radiotéléphone (1) mobile par des éléments de commande et d'affichage dans un véhicule automobile, le radiotéléphone (1) étant relié à un dispositif (2) mains libres standard, qui est installé comme appareil autonome dans le véhicule et qui comporte un microphone et un haut-parleur, et un module (5) d'interface centrale autonome est relié au téléphone mobile par des interfaces standardisées et le radiotéléphone (1) est relié par le module (5) d'interface centrale autonome à une unité (3) d'entrée et à une unité (4) de sortie,
**caractérisé**
- **en ce que** l'unité (3) d'entrée et l'unité (4) de sortie sont intégrées dans un autre appareil électronique installé dans le véhicule,
- **en ce que** le module (5) d'interface dispose d'une interface standardisée pour la communication avec l'unité (3) d'entrée et avec l'unité (4) de sortie de l'autre appareil électronique et
- **en ce que** le module (5) d'interface comporte une unité (7) de gestion de communication pour transformer des formats de données de télécommande entre le radiotéléphone (1) et l'unité (3) d'entrée et l'unité (4) de sortie de l'autre appareil électronique.

2. Agencement suivant la revendication 1, **caractérisé en ce que** l'unité (3) d'entrée et l'unité (4) de sortie font partie d'un système (8) audio.

3. Agencement suivant la revendication 1, **caractérisé en ce que** l'unité (3) d'entrée et l'unité (4) de sortie font partie d'un système (9) de navigation.

4. Agencement suivant la revendication 1, **caractérisé en ce qu'**en même temps, plusieurs appareils électroniques installés dans le véhicule sont reliés par le module (5) d'interface à des unités (3) d'entrée et/ou à des unités (4) de sortie.

5. Agencement suivant l'une des revendications précédentes, **caractérisé en ce que** la liaison entre le radiotéléphone (1) et le module (5) d'interface est formée par une liaison (10) sans fil à courte distance.

6. Agencement suivant l'une des revendications précédentes 1 à 4, **caractérisé en ce que** la liaison de radiotéléphone (1) et le module (5) d'interface est formée par bus (11) de données.

7. Agencement suivant la revendication 6, **caractérisé en ce que** la liaison entre le radiotéléphone (1) et le module (5) d'interface est formée par le même bus (11) de données que celui qui relie aussi le radiotéléphone (1) et le dispositif (2) mains libres standard, et **en ce que** le module (5) d'interface est monté par ce bus (11) de données entre le radiotéléphone (1) et le dispositif (2) mains libres standard.

8. Agencement suivant l'une des revendications précédentes, **caractérisé en ce que** le module (5) d'interface est conçu pour produire de soi-même une liaison radio vers un serveur extérieur.

9. Agencement suivant la revendication 8, **caractérisé en ce que** le module (5) d'interface est conçu pour demander du serveur extérieur et en recevoir, par signal radio, les informations nécessaires à la transformation des formats de données entre le radiotéléphone (1) et l'unité (3) d'entrée et l'unité (4) de sortie.

10. Agencement suivant l'une des revendications précédentes, **caractérisé en ce que** la fonctionnalité du module (5) d'interface est étendue au moyen de modules (12) supplémentaires, une interface (13) spéciale étant prévue pour la liaison des modules (12) supplémentaires avec le module (5) d'interface.

11. Agencement suivant la revendication 10, **caractérisé en ce que** le module (12) supplémentaire est un module d'internet.

12. Agencement suivant la revendication 10, **caractérisé en ce que** le module (12) supplémentaire est un module bluetooth.

13. Module (5) d'interface à utiliser dans un système comportant un téléphone (1) mobile, un dispositif de mains libres standard et un autre appareil extérieur ayant une unité (3) d'entrée et une unité de sortie qui y est intégrée pour la réalisation d'une liaison de communication entre le radiotéléphone (1) et l'autre appareil extérieur, par laquelle des instructions de commande pour la télécommande du radiotéléphone (1) peuvent être transmises de l'appareil extérieur au radiotéléphone, le module (5) d'interface disposant d'une première interface standardisée pour la communication avec le radiotéléphone (1) dans un premier format de données et d'une deuxième interface standardisée pour la communication avec l'appareil extérieur dans un deuxième format de données et le module (5) d'interface ayant une unité (7) de gestion de communication pour la transformation des formats de données.

14. Module (5) d'interface suivant la revendication 13, **caractérisé en ce que** le module (5) d'interface dispose d'une liaison (10) sans fil de courte distance pour la communication avec le radiotéléphone (1).

15. Module (5) d'interface suivant la revendication 13, **caractérisé en ce que** le module (5) d'interface dispose d'un bus (11) de données pour la communication avec le radiotéléphone (1).

16. Module (5) d'interface suivant la revendication 15, **caractérisé en ce que** le bus (11) de données pour la communication avec le radiotéléphone (1) est le même bus de données que celui par lequel le radiotéléphone (1) et le dispositif (2) de mains libres standard peuvent être reliés, et **en ce que** le module (5) d'interface peut être monté par ce bus (11) de données entre le radiotéléphone (1) et le dispositif (2) de mains libres standard.

17. Module (5) d'interface suivant l'une des revendications précédentes 13 à 16, **caractérisé en ce qu'**il y a dans le module (5) d'interface une interface (13) de bus spécial pour augmenter la fonctionnalité du module (5) d'interface au moyen de modules (12) supplémentaires.

18. Module (5) d'interface suivant la revendication 17, **caractérisé en ce que** le module (12) supplémentaire est un module d'Internet.

19. Module (5) d'interface suivant la revendication 17, **caractérisé en ce que** le module (12) supplémentaire est un module bluetooth.

20. Module (5) d'interface suivant l'une des revendications précédentes 13 à 19, **caractérisé en ce que** le module (5) d'interface est conçu pour ménager de soi-même une liaison radio vers un serveur extérieur.

21. Module (5) d'interface suivant la revendication 20, **caractérisé en ce que** le module (5) d'interface est conçu pour demander un serveur extérieur et en recevoir, par signal radio, les informations nécessaires à la transformation des formats de données entre le radiotéléphone (1) et l'unité (3) d'entrée et l'unité (4) de sortie.
